# EUROPEAN PATENT SPECIFICATION

(11) **EP 4 107 846 B1**
(45) Date of publication and mention of the grant of the patent: **02.12.2026**
(21) Application number: 21757519.0
(22) Date of filing: 17.02.2021
(51) Int. Cl.: H02K 41/00, H02K 7/00, H02K 7/06, H02K 7/075, F16H 25/14, H02K 49/10

(54) **MAGNETIC DRIVE MOTOR ASSEMBLY AND ASSOCIATED METHOD OF USE**
MAGNETISCHE ANTRIEBSMOTORANORDNUNG UND ZUGEHÖRIGES VERWENDUNGSVERFAHREN
ENSEMBLE MOTEUR À ENTRAINEMENT MAGNÉTIQUE ET PROCÉDÉ D'UTILISATION ASSOCIÉ

(30) Priority: 17.02.2020 US 202062977568 P
(43) Date of publication of application: 28.12.2022
(73) Proprietor: Magnamotor, LLC., Albany, GA 31707 (US)
(72) Inventor: HERRIN, Robert, Orlando, Florida 32810 (US); KHANT, Sean R., Tampa, Florida 33602 (US)
(74) Representative: Cabinet Chaillot
(86) International application number: PCT/US2021/018362
(87) International publication number: WO 2021/167969

(56) References cited:
- FR-A5- 2 036 646
- US-A- 3 368 462
- US-A- 3 899 703
- US-A- 3 899 703
- US-A- 4 022 068
- US-A- 4 384 221
- US-A- 5 197 279
- US-A1- 2005 116 567
- US-A1- 2010 148 610
- US-A1- 2010 148 610
- US-B1- 8 664 816
- US-B1- 8 664 816

## Description

### CROSS-REFERENCE TO RELATED APPLICATIONS

This application claims priority to currently pending U.S. Provisional Patent Application No. 62/977,568 filed on February 17, 2020 and entitled "Magnetic Drive Motor Assembly and Associated Method of Use.

### BACKGROUND OF THE INVENTION

Magnetically driven motors are known in the art in which a rotating set of magnets are influenced by attractive and repulsive forces created by opposing magnets. In one magnetically driven motor known in the art, a permanent magnet is rotated about an axis extending between opposing north and south poles. The magnetic field of the rotated permanent magnet interacts with magnetic fields of the permanent magnets carried by a magnetic shuttle for repelling and attracting the fixed permanent magnets, thereby providing a linear reciprocating movement of the magnetic shuttle responsive to the rotary motion of the rotated permanent magnet.

While it is known in the art to use a direction of motion to convert a linear motion to a rotary motion and, in the alternative, to convert a rotary motion to a linear motion, there are inherent inefficiencies in these conversions.

Accordingly, what is needed in the art is an improved system and method that enhances the operation of known magnetic motors for improving efficiency of power sources and enhancing the power output from such motors.

US 3 368 462 A discloses a camshaft arrangement according to the preamble of claim 1.

### SUMMARY OF INVENTION

In various embodiments, the present invention provides a magnetic transmission that operates economically and efficiently to provide power to a load. The various embodiments provide an input camshaft arrangement for transforming rotational motion to reciprocating motion and an output camshaft arrangement for transforming reciprocating motion to rotational motion.

In one embodiment to provide an efficient transformation of rotational motion to reciprocating motion, a camshaft arrangement is provided for establishing a dwell time of a plurality of rotatable permanent magnets of a magnetic drive train. In this embodiment, the camshaft arrangement is according to claim 1 and includes an input cam comprising a recessed track to engage a cam roller of a crank arm and further comprising one or more supports to attach the input cam to a reciprocating shaft. The reciprocating shaft rotates a plurality of rotatable permanent magnets in response to a rotation of the crank arm that results in a reciprocating stroke of a shuttle comprising a plurality of fixed permanent magnets. In operation, the recessed track of the input cam is dimensioned to establish a desired dwell time of the plurality of rotatable permanent magnets during the reciprocating stroke of the shuttle.

In particular, the dwell time established by the recessed track of the input cam is sufficient to allow the shuttle to complete its reciprocating stroke. The dimensions of the recessed track of the input cam effectively provide for maximum magnetic alignment between the plurality of rotatable permanent magnets and the plurality of fixed permanent magnets of the shuttle during the reciprocating stroke of the shuttle.

In a specific embodiment, the width of the recessed track of the input cam at 0° and 180° positions is substantially equal to the diameter of the cam roller. Additionally, the width of the recessed track of the input cam at 90° and 270° positions is substantially equal to a swing of the crank arm.

By utilizing the input cam having a properly dimensioned recessed track, a continuous drive motor can be used to rotate a crank shaft coupled to the crank arm, thereby removing the need to utilize a servo motor to control the timing of the reciprocating shaft and shuttle motion.

In another embodiment to provide an efficient transformation of reciprocating motion to rotational motion, a camshaft arrangement for transforming a reciprocating input to a rotational output is provided. The camshaft arrangement is according to claim 8 and includes an output cam having a recessed track to engage a cam roller of a reciprocating shaft. In this embodiment, the force produced by the reciprocating shaft fluctuates during a reciprocating stroke of the reciprocating shaft and the recessed track of the output cam is dimensioned to reduce the fluctuation in the force produced by the reciprocating shaft during the reciprocating stroke. In general, the recessed track of the output cam is dimensioned to maximize a transformation of energy generated by the reciprocating stroke of the reciprocating shaft to a rotational output.

In a particular embodiment, the recessed track of the output cam is dimensioned to provide a constant positive acceleration portion, a constant velocity portion and a constant negative acceleration portion to maximize the transformation of energy generated by the reciprocating stroke to a rotational output. More specifically, the constant positive acceleration portion of the recessed track of the output cam comprises approximately 20% of the recessed track, the constant velocity portion of the recessed track of the output cam comprises approximately 50% of the recessed track and the constant negative acceleration portion of the recessed track of the output cam comprises approximately 30% of the recessed track.

In another embodiment, the present invention provides a magnetic drive train apparatus according to claim 14, including a plurality of rotatable permanent magnets, each of the rotatable permanent magnets having a north pole and an opposing south pole aligned within a plane and a plurality of first rotational shafts, wherein each one of the plurality of rotatable permanent magnets is rotatable by a respective one of the plurality of first rotational shafts about an axis within the plane and between the opposing poles. The magnetic drive train further includes a first reciprocating shaft coupled to the plurality of first rotational shafts, a shuttle comprising a plurality of fixed permanent magnets affixed to a shuttle, the plurality of fixed permanent magnets positioned such that a rotation of the plurality of rotatable permanent magnets causes an alternate repelling force and attracting force on the plurality of fixed permanent magnets that results in a reciprocating stroke of the shuttle parallel to the axis and a crank arm having a cam roller positioned at a first end of the crank arm. To provide the efficient transformation of rotational motion to reciprocating motion, the magnetic drive train includes an input cam coupled to the first reciprocating shaft, the input cam comprising a recessed track to engage the cam roller of the crank arm, wherein a rotation of the crank arm results in a reciprocating stroke of the first reciprocating shaft perpendicular to the axis and in the corresponding reciprocating stroke of the shuttle parallel to the axis and wherein the recessed track is dimensioned to establish a dwell time during the reciprocating stroke of the first reciprocating shaft. The magnetic drive train further includes a second reciprocating shaft coupled to the shuttle, the second reciprocating shaft comprising a cam roller. To provide an efficient transformation of reciprocating motion to rotational motion, the magnetic drive train further includes an output cam having a recessed track to engage the cam roller of the second reciprocating shaft, wherein a force produced by the reciprocating shaft fluctuates during a reciprocating stroke of the reciprocating shaft and wherein the recessed track of the output cam is dimensioned to reduce the fluctuation in the force produced by the reciprocating shaft during the reciprocating stroke of the second reciprocating shaft.

In the various embodiments of the present invention, an input cam and an output cam are provided to enhance the operation of known magnetic motors for improving efficiency of power sources and enhancing the power output from such motors.

### BRIEF DESCRIPTION OF THE DRAWINGS

For a fuller understanding of the invention, reference should be made to the following detailed descriptions, taken in connection with the accompanying drawings, in which:
FIG. 1 is an illustration of a drive train comprising an input cam to provide a desired dwell time, in accordance with an embodiment of the present invention.
FIG. 2 is an alternative view of the drive train illustrated in FIG. 1
FIG. 3 is an illustration of a drive train comprising an input cam to provide a desired dwell time in combination with a magnetic linear shuttle, in accordance with an embodiment of the present invention.
FIG. 4 is a detailed view of the recessed track of the input cam, in accordance with an embodiment of the present invention.
FIG. 5 is a detailed view of the cam, cam roller, crank arm and crank shaft of the input cam, in accordance with an embodiment of the present invention.
FIG. 6 is an illustration of a drive train comprising an output cam for harvesting the energy from a linear magnetic shuttle, in accordance with an embodiment of the present invention.
FIG. 7 is an illustration of a drive train comprising an output barrel cam for harvesting the energy from a linear magnetic shuttle, in accordance with an embodiment of the present invention.
FIG. 8 is a detailed view of an output cam and movement mechanism, in accordance with an embodiment of the present invention.
FIG. 9 is a detailed view of the recessed track of the output cam, in accordance with an embodiment of the present invention.

### DETAILED DESCRIPTION OF THE INVENTION

The present invention will now be described more fully hereinafter with reference to the accompanying drawings, in which exemplary embodiments of the invention are shown. However, the illustrated embodiments are not intended to be limiting and are provided so that the disclosure is thorough and complete and fully conveys the scope of the invention as understood by one with ordinary skill in the art. Like numbers refer to like elements throughout the figures and accompanying detailed description.

In various embodiments, the present invention provides input and output camshaft arrangements for transforming between reciprocating magnetic driven motion and rotary magnetic driven motion in an efficient drive train.

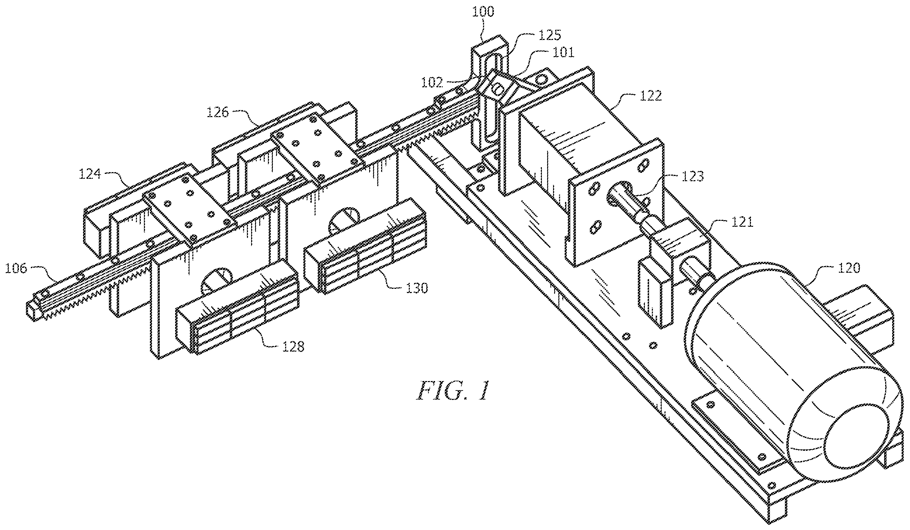

A first embodiment provides an improvement to an input cam for driving the rotary motion of the efficient drive train. As shown in FIG. 1, in one embodiment of the present invention, a magnetic transmission for motion conversion includes an improved drive train comprising a plurality of rotatable permanent magnets **124, 126, 128, 130** coupled to a reciprocating shaft **106.** The embodiment further includes a camshaft arrangement including an input cam **100** for controlling the positioning and dwell time of the plurality of rotatable permanent magnets **124, 126, 128, 130.** Each of the rotatable permanent magnets **124, 126, 128, 130** includes a north pole and an opposing south pole and are rotatable about a common axis. The rotatable permanent magnets **124, 126, 128, 130** are rotated about the common axis using the input cam **100,** a crank arm **101,** and a cam roller **102** driven by a continuous drive motor **120.** The electric motor **120** is coupled to an output shaft **123,** which is coupled to the crank arm **101** to drive the movement of the rotatable permanent magnets **124, 126, 128, 130** using the linear shaft **106.** The revolutions per minute (rpm) of the continuous drive motor **120** may be reduced using a gear reducer **122.** A torque transducer **121** is used for measuring the input torque during testing. The cam roller **102** of the crank arm **101** is positioned within a recessed track **125** provided by the input cam **100.** The recessed track **125** is dimensioned to establish the dwell time of the plurality of rotatable permanent magnets **124, 126, 128, 130** during the reciprocating stroke of a shuttle (not shown in this view).

In operation, the continuous drive motor **120** drives the crank arm **101** using the output shaft **123,** which causes the cam roller **102** to follow along the recessed track **125** provided by the input cam **100,** thereby causing the linear shaft **106** to move in a linearly reciprocating motion, which results in the rotatable permanent magnets **124, 126, 128, 130** rotating 180°, and then reversing 180°, with the movement of the linear shaft **106.**

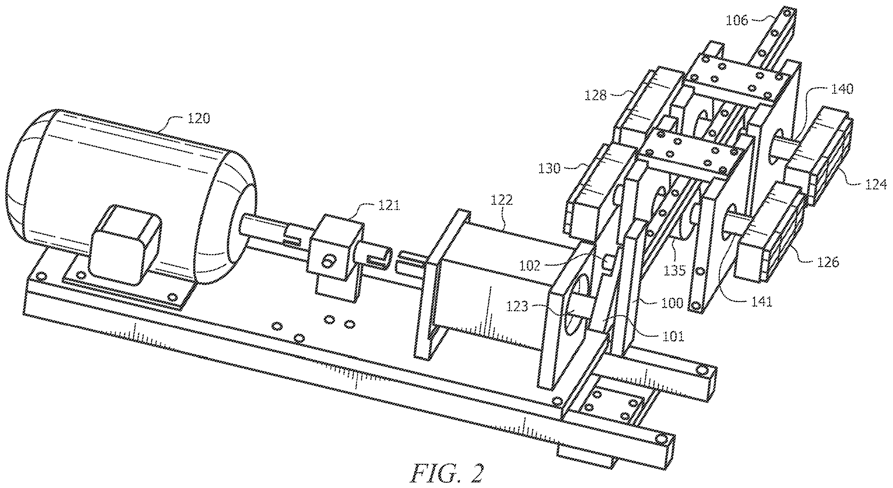

An additional view of the magnetic transmission is shown in FIG. 2, which more clearly illustrates the output shaft **130** that is coupled to the crank arm **101** and driven by the electric motor **120** to affect the reciprocation of the linear shaft **106** and the corresponding rotation of the rotatable permanent magnets **124, 126, 128, 130.** As shown in FIG. 2, the rotational movement of the rotatable permanent magnets **124, 126, 128, 130** is accomplished using a gear **135** engaged with a gear rack **106** to rotate a first and second rotatable permanent magnet **124, 128** about a first common axis **140** and to rotate a third and fourth rotatable permanent magnet **126, 130** about a second common axis **141.**

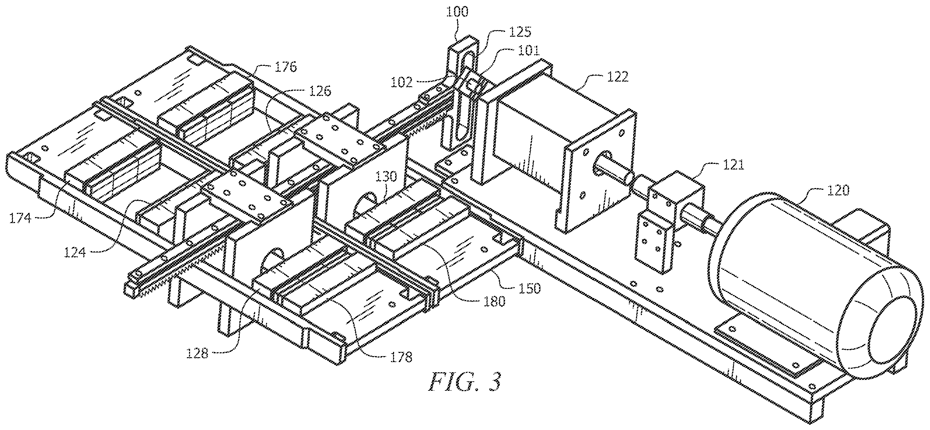

FIG. 3 illustrates the magnetic drive system, which further includes a magnetic shuttle **150** that is confined to a linear reciprocating movement generally parallel to the first common axis **140** and second common axis **141.** Affixed to the magnetic shuttle **150** are a plurality of stationary permanent magnets **174, 176, 178, 180.** In this embodiment, the first stationary permanent magnet **174** is positioned opposite a first rotatable permanent magnet **124,** a second stationary permanent magnet **176** is positioned opposite a second rotatable permanent magnet **126,** a third stationary permanent magnet **178** is positioned opposite a third rotatable permanent magnet **128** and a fourth stationary permanent magnet **180** is positioned opposite a fourth rotatable permanent magnet **130.** As shown, the first and second stationary permanent magnets **174, 176** and the third and fourth stationary permanent magnets **178, 180** are affixed to opposing first and second sides of the magnetic shuttle **150.** Additionally, each of the stationary permanent magnets **174, 176, 178, 180** has a north pole and a south pole. The magnets are positioned such that rotation of the rotatable permanent magnets **124, 126, 128, 130** is coincident with a repelling and an attracting force of the stationary permanent magnets **174, 176, 178, 180** of the magnetic shuttle **150,** resulting in the reciprocating movement of the magnetic shuttle **150.** In operation, the electric motor **120** provides rotation of the rotatable permanent magnets **124, 126, 128, 130,** which affects linear movement of the stationary permanent magnets **174, 176, 178, 180** and a reciprocating movement of the magnetic shuttle **150.**

While the exemplary embodiments illustrated in FIG. 1 - FIG. 3 show a fixed number of rotatable permanent magnets and stationary permanent magnets, this is not intended to be limiting and any number of magnets are within the scope of the present invention. Additionally, while the embodiments describe an electric motor, it is well understood that other well-known means for driving the rotation of the magnets may be employed, without departing from the invention.

In order to maximize the amount of rotationally to linearly (reciprocating) transferred energy, when the rotatable permanent magnets **124, 126, 128, 130** are rotated 180°, a dwell time is desirable to allow the magnetic shuttle **150** enough time to complete its reciprocating stroke. While it is known in the art to utilize an intermittent drive, or servo motor, to hold the rotatable permanent magnets **124, 126, 128, 130** in a constant position as the magnetic shuttle **150** completes its stroke, intermittent drives are more expensive and more complex than continuous drive motors, rendering their use undesirable.

To overcome the need for the use of intermittent drives or servo motors, in the present embodiment the dwell time is provided by the input cam **100,** thereby allowing the use of a standard AC motor **120,** which provides a continuous input rotation for the rotatable permanent magnets **124, 126, 128, 130.** The use of the input cam **100** having a properly dimensioned recessed track **125** and a continuous drive motor **120** requires less energy and reduces the overhead of the magnetic drive assembly.

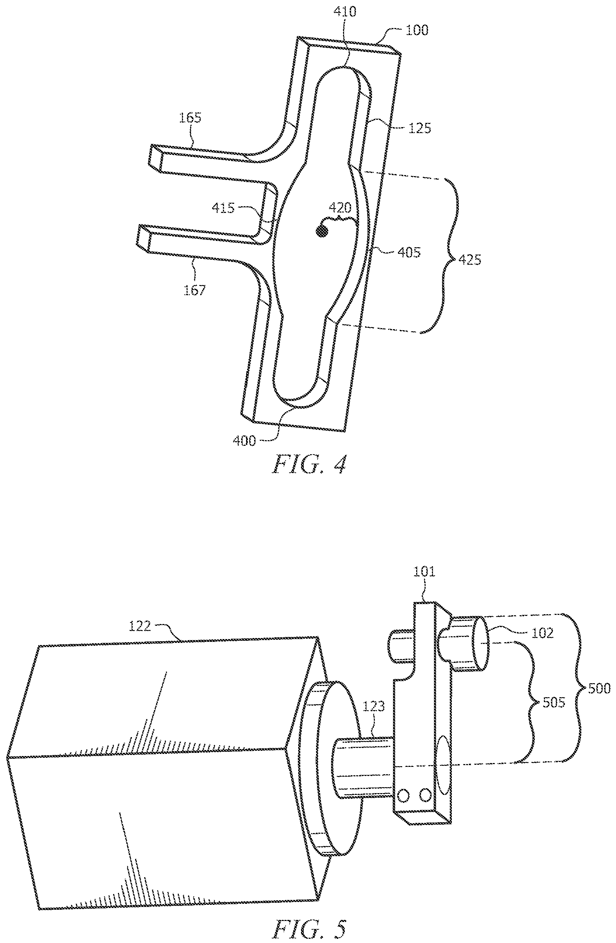

With reference to FIG. 4, the shape of the recessed track **125** of the input cam **100** establishes the dwell time for the rotatable permanent magnets **124, 126, 128, 130** when driven with a continuous motor **120.** The legs **165, 167** of the input cam **100** are configured to be attached to the linear shaft **106** that rotates the rotatable permanent magnets **124, 126, 128, 130.** The design of the recessed track **125** provides a sinusoidal movement with minimal movement at the end of the stroke of the magnetic shuttle **150,** thereby providing the necessary dwell time to maximize the transferred energy. The specific dwell time can be controlled by the physical shape of the recessed track **125** of the input cam **100.**

In determining the dimensions of the recessed track **125** of the input cam **100,** the load and velocity of the magnetic shuttle **150** must be considered, as the dwell time should match the time of the magnetic shuttle **150** movement. More importantly, the dwell time established by the recessed track **125** should be sufficient enough to allow for maximum magnetic alignment of the rotatable permanent magnets **124, 126, 128, 130** and the fixed permanent magnets **174, 176, 178, 180** as the magnetic shuttle **150** moves through its stroke. In general, the dimensions of the recessed track **125** may vary based upon the specific application. In particular, the recessed track **125** is dimensioned to having a portion **425** that establishes the necessary dwell time.

In a particular embodiment, the dwell time provided by the input cam **100** may be achieved by matching the width **405** of the recessed track **125** at the 90° position **400** and 270° position **415** to a swing of the crank arm **101** swing. As shown in FIG. 4, the width of the recessed track **125** of the input cam **100** at the 0° position **400** and 180° position **410** is substantially equal to a diameter of the cam roller **102,** and the width of the recessed track **125** at the 90° **405** and the 270° position **415** is substantially equal to a swing of the crank arm **101.**

FIG. 5 provides a more detailed view of the cam shaft **123,** cam arm **101** and cam roller **102** of the present invention. As shown in FIG. 5, the cam shaft **123** is driven by an output from the gear reducer **122.** The cam roller 102 is positioned within the recessed track **125** of the input cam **100,** as previously described with reference to FIG. 1 - FIG. 4. The swing of the crank arm **101** is determined as the distance **500** from the center of the crank arm **101** to the outside diameter of the cam roller **102.** Additionally, the throw of the cam is the distance of movement of the cam arm **101,** which is twice the distance **505** from the center of the crank shaft **102** to the center of the cam roller **102** on the crank arm **101.**

Accordingly, as shown in FIG. 1 - FIG. 5, in one embodiment, the present invention provides an improved magnetic drive train whereby an input cam **100** and a continuous drive motor **120** are used to harvest the maximum amount of energy when converting the rotary motion of the rotatable permanent magnets **124, 126, 128, 130** to the reciprocating motion of the magnetic shuttle **150.**

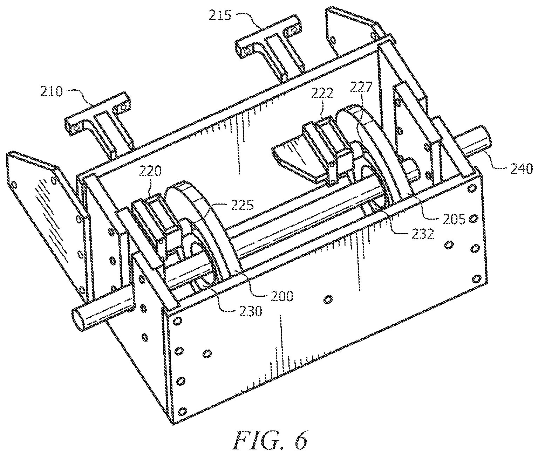

In a second embodiment, the reciprocating linear motion of the magnetic shuttle **150** may be converted back to a rotary motion. As shown in FIG. 6, two output cams **200, 205** are coupled to the magnetic shuttle **150** using shuttle attachment brackets **210, 215.** In particular, the shuttle attachment brackets **210, 215** are attached to the magnetic shuttle **150** on one side of the shuttle bracket **150,** as shown in FIG. 3. In operation, the cams **200, 205** are used to harvest the energy from the magnetic driven linear shuttle **150.**

As illustrated in FIG. 6, an output shaft **240** is driven by the rotational movement of the two output cams **200, 205.** The movement of the magnetic shuttle **150** causes linear movement of the linear input shaft **220, 222** coupled to each of the two output cams **200, 205,** respectively. Each linear input shaft **220, 222** includes a cam roller **225, 227** that is positioned with a recessed track **230, 232** of each of the corresponding output cams **200, 205.** The dimensions of the recessed track **230, 232** of the output cams **200, 205** controls the movement of the output shaft **240.**

The objective of the shape of the recessed track **230, 232** provided by the output cams **200, 205** is to allow the efficient capture of energy of the linear motion of the magnetic shuttle **150** that is powered by the interaction between the permanent magnets of the magnetic shuttle **150** and the rotatable permanent magnets, as previously described with reference to the first embodiment. The force curve of a linear motion magnetic system, such as the magnetic shuttle **150,** is affected by the magnetic gap as it moves through its path. The desired output for an application varies and the design of the recessed track **230, 232** of the output cams **200, 205** allows for modification of the output force and velocity. Accordingly, the inertia of the mechanical system, velocity and magnetic forces can be controlled by the shape of the recessed track **230, 232** of the output cams **200, 205.**

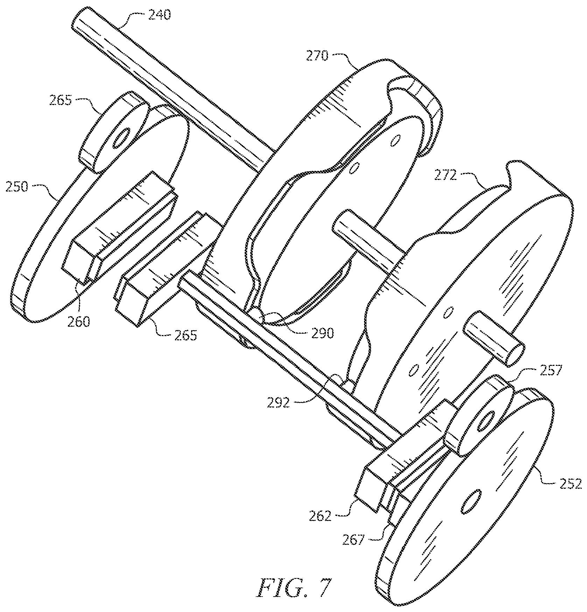

In the embodiment illustrated in FIG. 6, the output shaft **240** is perpendicular to the motion of the linear shaft **220, 222.** However, as shown in FIG. 7, it may be desirable to change the orientation to be in the same plane as the linear motion of the axis of the linear shaft **220, 222.** To achieve the configuration illustrated in FIG. 7, a barrel type output cam **270, 272** can be used with multiple axes. In this embodiment, the barrel cams **270, 272** rotate an output shaft **240,** wherein each of the barrel cams **270, 272** are driven by a combination of a drive gear **255, 257,** axis rotational gear **250, 252,** fixed magnet **260, 262,** and rotating magnet **265, 267.** As in the embodiment shown in FIG. 6, the cam rollers **290, 292** in the embodiment of FIG. 7 trace along the recessed track of the barrel output cams **270, 272** to provide the desired velocity output.

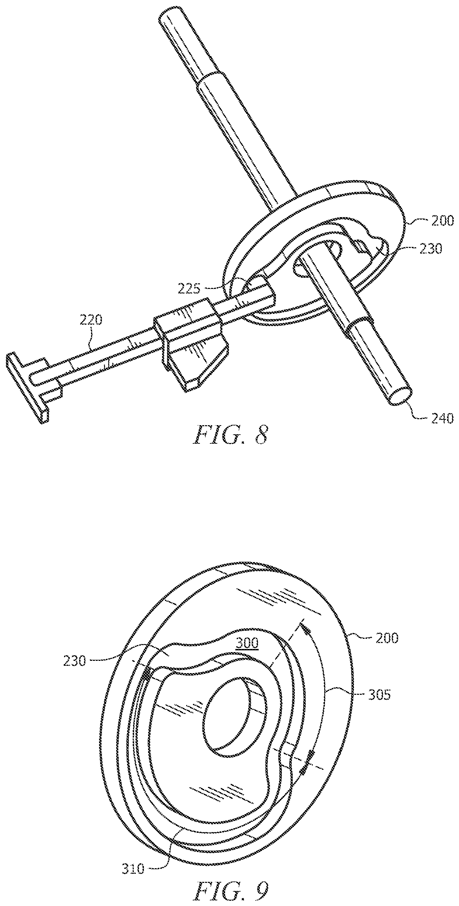

The relationship between the cam, the cam roller and the linear shaft **220** of one of the output cams **200** of FIG. 7 is more clearly illustrated in FIG. 8. As shown in FIG. 8, the output shaft **240** is driven by the output cam **200,** and the rotational motion of the output cam **200** is provided by the cam roller **235** of the linear shaft **220** traveling along the recessed track **230** of the output cam **200.**

FIG. 9 additionally illustrates an exemplary shape of the recessed track **230** of the output cam **200.** In the present invention, the recessed track **230, 232** of the output cams **200, 205** are dimensioned to capture the energy of the magnetic shuttle **150** and to transfer it to a rotary motion. The shuttle movement is caused by the magnetic forces, wherein the force curve during its stroke is "U" shaped. This resulting force curve is inherent in a magnetic system and can result in mechanical failures at the end of the stroke, where the force is at its peak and overpowers the load. As described, the resulting force curve, without use of the output cams **200, 205** will not be flat, but instead will be at its lowest level near the center of the stroke of the magnetic shuttle **150** and at its peak level at the end of the stoke. This is not ideal, and it is desirable to have a constant force curve from the movement of the magnetic shuttle **150.** In the present invention, to help achieve a constant force curve on the output, the output cam **200, 205** has been introduced.

The dimensions of the recessed track **230** of the output cam **200** shown in FIG. 9 include a constant negative acceleration area **300** a constant positive acceleration area **305** and a constant velocity area **310.** The negative acceleration area **300** of the recessed track **230** should change the velocity to allow the load to slow the shuttle velocity as it nears the end of the stroke. The inertia of the moving load thus enters into the design of the slope of the recessed track at the end of the stroke. Additionally, the center of the stroke is the minimum force of the magnets and the slope of the recessed track of the cam should be a constant velocity in this area of the track. In a particular embodiment, assuming that the input motion to rotate the magnets is 180°, the recessed track of the output cam **200, 205** will determine the magnetic drive ratio (degrees per stroke).

The recessed tracks shown in FIG. 8 and FIG. 9 are illustrative of these desired conditions. Additionally, the output cams **200, 205** keep the magnetic shuttle **150** from drifting from the end of the stroke, as the magnets are rotated for the next stroke. The significance of this is to maximize the effectiveness of the full stroke of the magnetic shuttle **150.** In general, the shape of the lobes of the recessed track of the output cams, along with the stroke of the magnetic shuttle, are variables to be determined based upon the application and the size of the magnets.

The output cams **200, 205** as illustrated in the exemplary embodiments provide a constant acceleration for the first 20% of the shuttle stroke, a constant velocity through the next 50%, and a constant negative acceleration for the remaining 30%. However, these parameters can be altered depending upon the application, while providing the same result, which is to maximize the harnessing of the shuttle energy and to apply the harnessed energy into the rotary output.

In the present invention, the output cam is used to provide a constant force curve and to change the velocity at the end of the reciprocating stroke. The end of the reciprocating stroke is the peak of the force curve, which will increase the velocity, if the load is not changed. Contrary to most cam designs in which the recessed track is shaped to provide a preferred output motion, in the present invention, the recessed track of the cam is shaped to control the output force and input velocity.

Additionally, adding a flywheel load to store the energy in either of the embodiments shown in FIG. 7 or FIG. 8, reduces the velocity at the highest energy portion of the linear stroke. Utilizing a flywheel increases the reliability and efficiency of the linear system and the energy to decrease the velocity is stored in the flywheel for output use.

It will be seen that the advantages set forth above, and those made apparent from the foregoing description, are efficiently attained. Since certain changes may be made in the above construction without departing from the scope of the invention, it is intended that all matters contained in the foregoing description or shown in the accompanying drawings shall be interpreted as illustrative and not in a limiting sense.

The scope of the invention defined by the claims.

## Claims

1. A camshaft arrangement for establishing a dwell time of a plurality of rotatable permanent magnets (124, 126, 128, 130) of a magnetic drive train, the camshaft arrangement comprising:
an input cam (100) comprising a recessed track (125) to engage a cam roller (102) of a crank arm (101) and further comprising one or more supports to attach the input cam (100) to a reciprocating shaft (106), the reciprocating shaft (106) to rotate a plurality of rotatable permanent magnets (124, 126, 128, 130) in response to a rotation of the crank arm (101) that is suitable for producing a reciprocating stroke of a shuttle (150) comprising a plurality of fixed permanent magnets (174, 176, 178, 180); and
wherein the recessed track (125) of the input cam (100) is dimensioned to establish a dwell time of the plurality of rotatable permanent magnets (124, 126, 128, 130) during the reciprocating stroke of the shuttle (150),
**characterized in that** the dwell time established by the recessed track (125) of the input cam (100) is sufficient to allow the shuttle (150) to complete its reciprocating stroke.

2. The camshaft arrangement of claim 1, wherein the dwell time established by the recessed track (125) of the input cam (100) provides for maximum magnetic alignment between the plurality of rotatable permanent magnets (124, 126, 128, 130) and the plurality of fixed permanent magnets (174, 176, 178, 180) of the shuttle (150) during the reciprocating stroke of the shuttle (150).

3. The camshaft arrangement of claim 1, wherein the plurality of rotatable permanent magnets (124, 126, 128, 130) are rotated 180° during each rotation of the crank arm (101).

4. The camshaft arrangement of claim 1, wherein a velocity of the rotation of the plurality of rotatable permanent magnets (124, 126, 128, 130) is sinusoidal and the recessed track (125) of the input cam provides for minimal movement of the cam roller (102) at 90° and 270° positions of the recessed track (125).

5. The camshaft arrangement of claim 1, wherein a width at 0° and 180° positions of the recessed track (125) is substantially equal to a diameter of the cam roller (102), and wherein a width at 90° and 270° positions of the recessed track (125) is substantially equal to a swing of the crank arm (101).

6. The camshaft arrangement of claim 1, further comprising:
a crank shaft (123) coupled to the crank arm (101); and
a continuous drive motor (120) coupled to the crank shaft (123) to provide the rotation of the crank arm (101).

7. The camshaft arrangement of claim 4, wherein a width at 90° and 270° positions of the recessed track (125) is substantially equal to a distance from a center of the crank shaft (123) to an outside diameter of the cam roller (102).

8. A camshaft arrangement for transforming a reciprocating input to a rotational output, the camshaft arrangement comprising:
an output cam (200, 205) having a recessed track (230, 232) to engage a cam roller (225, 227) of a reciprocating shaft (220, 222), wherein a force produced by the reciprocating shaft (220, 222) fluctuates during a reciprocating stroke of the reciprocating shaft (220, 222); and
wherein the recessed track (230, 232) of the output cam (200, 205) provides a constant positive acceleration portion, a constant velocity portion and a constant negative acceleration portion to reduce the fluctuation in the force produced by the reciprocating shaft (220, 222) during the reciprocating stroke and the recessed track (230, 232) of the output cam (200, 205) is dimensioned to maximize a transformation of energy generated by the reciprocating stroke of the reciprocating shaft (220, 222) to a rotational output.

9. The camshaft arrangement of claim 8, wherein the constant positive acceleration portion of the recessed track (230, 232) of the output cam (200, 205) comprises approximately 20% of the recessed track.

10. The camshaft arrangement of claim 8, wherein the constant velocity portion of the recessed track (230, 232) of the output cam (200, 205) comprises approximately 50% of the recessed track (230, 232).

11. The camshaft arrangement of claim 8, wherein the constant negative acceleration portion of the recessed track (230, 232) of the output cam (200, 205) comprises approximately 30% of the recessed track (230, 232).

12. The camshaft arrangement of claim 8, further comprising:
a shuttle (150) coupled to the reciprocating shaft (220, 222), the shuttle (15) comprising a plurality of fixed permanent magnets (174, 176, 178, 180), the plurality of fixed permanent magnets (174, 176, 178, 180) positioned such that a rotation of a plurality of rotatable permanent magnets (124, 126, 128, 130) causes an alternate repelling force and attracting force on the plurality of fixed permanent magnets (174, 176, 178, 180) that results in the reciprocating stroke of the reciprocating shaft (220, 222).

13. The camshaft arrangement of claim 8, further comprising:
an output shaft (240) coupled to the output cam (200, 205), the output cam (200, 205) to rotate the output shaft (240) in response to the reciprocating stroke of the reciprocating shaft (220, 222); and
a flywheel coupled to the output shaft (240).

14. A magnetic drive train apparatus comprising:
a plurality of rotatable permanent magnets (124, 126, 128, 130), each of the rotatable permanent magnets (124, 126, 128, 130) having a north pole and an opposing south pole aligned within a plane;
a plurality of first rotational shafts, wherein each one of the plurality of rotatable permanent magnets (124, 126, 128, 130) is rotatable by a respective one of the plurality of first rotational shafts about an axis within the plane and between the opposing poles;
a first reciprocating shaft (106) coupled to the plurality of first rotational shafts;
a shuttle (150) comprising a plurality of fixed permanent magnets (174, 176, 178, 180) affixed to the shuttle (150), the plurality of fixed permanent magnets (174, 176, 178, 180) positioned such that a rotation of the plurality of rotatable permanent magnets (124, 126, 128, 130) causes an alternate repelling force and attracting force on the plurality of fixed permanent magnets (174, 176, 178, 180) that results in a reciprocating stroke of the shuttle (150) parallel to the axis;
a crank arm (101) having a cam roller (102) positioned at a first end of the crank arm (101);
an input camshaft arrangement according to claim 1, wherein the input cam (100) of the input camshaft arrangement is coupled to the first reciprocating shaft (106), the cam roller (102) of the crank arm (101) is engaged in the recessed track (125) of the input cam (100), and a rotation of the crank arm (101) results in a reciprocating stroke of the first reciprocating shaft perpendicular to the axis and in the corresponding reciprocating stroke of the shuttle (150) parallel to the axis;
a second reciprocating shaft (220, 222) coupled to the shuttle (150), the second reciprocating shaft (220, 222) comprising a cam roller (225, 227); and
an output camshaft arrangement according to claim 8, wherein the cam roller (225, 227) of the second reciprocating shaft (220, 222) is engaged in the recessed track (230, 232) of the output cam (200, 205) of the output camshaft arrangement.

15. The magnetic drive train apparatus of claim 14, further comprising a crank shaft (123) coupled to the crank arm (101) and a continuous drive motor (120) coupled to the crank shaft (123) to provide the rotation of the crank arm (101).

## Patentansprüche

1. - Nockenwellenanordnung zum Festlegen einer Verweilzeit einer Vielzahl von drehbaren Permanentmagneten (124, 126, 128, 130) eines magnetischen Antriebsstrangs, die Nockenwellenanordnung umfassend:
einen Eingangsnocken (100), umfassend eine vertiefte Laufbahn (125) zum Eingreifen einer Nockenrolle (102) eines Kurbelarms (101) und ferner umfassend eine oder mehrere Halterungen zum Befestigen des Eingangsnockens (100) an einer hin- und hergehenden Welle (106), wobei die hin- und hergehende Welle (106) zum Drehen einer Vielzahl von drehbaren Permanentmagneten (124, 126, 128, 130) als Reaktion auf eine Drehung des Kurbelarms (101) ist, die zum Erzeugen einer Hin- und Herbewegung eines Schlittens (150), der eine Vielzahl von feststehenden Permanentmagneten (174, 176, 178, 180) umfasst, geeignet ist; und
wobei die vertiefte Laufbahn (125) des Eingangsnockens (100) bemessen ist, um während der Hin- und Herbewegung des Schlittens (150) eine Verweilzeit der Vielzahl von drehbaren Permanentmagneten (124, 126, 128, 130) festzulegen,
**dadurch gekennzeichnet, dass** die durch die vertiefte Laufbahn (125) des Eingangsnockens (100) festgelegte Verweilzeit ausreichend ist, um dem Schlitten (150) zu ermöglichen, seine Hin- und Herbewegung abzuschließen.

2. - Nockenwellenanordnung nach Anspruch 1, wobei die durch die vertiefte Laufbahn (125) des Eingangsnockens (100) festgelegte Verweilzeit während der Hin- und Herbewegung des Schlittens (150) eine maximale magnetische Ausrichtung zwischen der Vielzahl von drehbaren Permanentmagneten (124, 126, 128, 130) und der Vielzahl von feststehenden Permanentmagneten (174, 176, 178, 180) des Schlittens (150) bereitstellt.

3. - Nockenwellenanordnung nach Anspruch 1, wobei die Vielzahl von drehbaren Permanentmagneten (124, 126, 128, 130) bei jeder Drehung des Kurbelarms (101) um 180° gedreht wird.

4. - Nockenwellenanordnung nach Anspruch 1, wobei eine Geschwindigkeit der Drehung der Vielzahl von drehbaren Permanentmagneten (124, 126, 128, 130) sinusförmig ist und die vertiefte Laufbahn (125) des Eingangsnockens eine minimale Bewegung der Nockenrolle (102) an den Positionen 90° und 270° der vertieften Laufbahn (125) bereitstellt.

5. - Nockenwellenanordnung nach Anspruch 1, wobei eine Breite an den Positionen 0° und 180° der vertieften Laufbahn (125) im Wesentlichen gleich ist wie ein Durchmesser der Nockenrolle (102), und
wobei eine Breite an den Positionen 90° und 270° der vertieften Laufbahn (125) im Wesentlichen gleich wie ein Ausschlag des Kurbelarms (101) ist.

6. - Nockenwellenanordnung nach Anspruch 1, ferner umfassend:
eine Kurbelwelle (123), die mit dem Kurbelarm (101) gekoppelt ist; und
einen kontinuierlichen Antriebsmotor (120), der mit der Kurbelwelle (123) gekoppelt ist, um die Drehung des Kurbelarms (101) bereitzustellen.

7. - Nockenwellenanordnung nach Anspruch 4, wobei eine Breite an den Positionen 90° und 270° der vertieften Laufbahn (125) im Wesentlichen gleich ist wie ein Abstand von einer Mitte der Kurbelwelle (123) zu einem Außendurchmesser der Nockenrolle (102).

8. - Nockenwellenanordnung zum Umwandeln eines hin- und hergehenden Eingangs in einen Drehausgang, die Nockenwellenanordnung umfassend:
einen Ausgangsnocken (200, 205), der eine vertiefte Laufbahn (230, 232) zum Eingreifen einer Nockenrolle (225, 227) einer hin- und hergehenden Welle (220, 222) aufweist, wobei eine Kraft, die durch die hin- und hergehende Welle (220, 222) erzeugt wird, während einer Hin- und Herbewegung der hin- und hergehenden Welle (220, 222) schwankt; und
wobei die vertiefte Laufbahn (230, 232) des Ausgangsnockens (200, 205) einen Abschnitt mit konstanter positiver Beschleunigung, einen Abschnitt mit konstanter Geschwindigkeit und einen Abschnitt mit konstanter negativer Beschleunigung bereitstellt, um die Schwankung der durch die hin- und hergehende Welle (220, 222) während der Hin- und Herbewegung erzeugten Kraft zu verringern, und die vertiefte Laufbahn (230, 232) des Ausgangsnockens (200, 205) bemessen ist, um eine Umwandlung von Energie, die durch die Hin- und Herbewegung der hin- und hergehenden Welle (220, 222) erzeugt wird, in einen Drehausgang zu maximieren.

9. - Nockenwellenanordnung nach Anspruch 8, wobei der Abschnitt mit konstanter positiver Beschleunigung der vertieften Laufbahn (230, 232) des Ausgangsnockens (200, 205) ungefähr 20 % der vertieften Laufbahn umfasst.

10. - Nockenwellenanordnung nach Anspruch 8, wobei der Abschnitt mit konstanter Geschwindigkeit der vertieften Laufbahn (230, 232) des Ausgangsnockens (200, 205) ungefähr 50 % der vertieften Laufbahn (230, 232) umfasst.

11. - Nockenwellenanordnung nach Anspruch 8, wobei der Abschnitt mit konstanter negativer Beschleunigung der vertieften Laufbahn (230, 232) des Ausgangsnockens (200, 205) ungefähr 30 % der vertieften Laufbahn (230, 232) umfasst.

12. - Nockenwellenanordnung nach Anspruch 8, ferner umfassend:
einen mit der hin- und hergehenden Welle (220, 222) gekoppelten Schlitten (150), wobei der Schlitten (150) eine Vielzahl von feststehenden Permanentmagneten (174, 176, 178, 180) umfasst, wobei die Vielzahl von feststehenden Permanentmagneten (174, 176, 178, 180) derart positioniert ist, dass eine Drehung einer Vielzahl von drehbaren Permanentmagneten (124, 126, 128, 130) eine abwechselnde Abstoßungskraft und Anziehungskraft auf die Vielzahl von feststehenden Permanentmagneten (174, 176, 178, 180) bewirkt, die zu der Hin- und Herbewegung der hin- und hergehenden Welle (220, 222) führt.

13. - Nockenwellenanordnung nach Anspruch 8, ferner umfassend:
eine Ausgangswelle (240), die mit dem Ausgangsnocken (200, 205) gekoppelt ist, wobei der Ausgangsnocken (200, 205) zum Drehen der Ausgangswelle (240) als Reaktion auf die Hin- und Herbewegung der hin- und hergehenden Welle (220, 222) ist; und
ein Schwungrad, das mit der Ausgangswelle (240) gekoppelt ist.

14. - Magnetische Antriebsstrangvorrichtung, umfassend:
eine Vielzahl von drehbaren Permanentmagneten (124, 126, 128, 130), wobei jeder der drehbaren Permanentmagnete (124, 126, 128, 130) einen Nordpol und einen gegenüberliegenden Südpol aufweist, die innerhalb einer Ebene ausgerichtet sind;
eine Vielzahl von ersten Drehwellen, wobei jeder der Vielzahl von drehbaren Permanentmagneten (124, 126, 128, 130) durch eine jeweilige der Vielzahl von ersten Drehwellen um eine Achse innerhalb der Ebene und zwischen den gegenüberliegenden Polen drehbar ist;
eine erste hin- und hergehende Welle (106), die mit der Vielzahl von ersten Drehwellen gekoppelt ist;
einen Schlitten (150), umfassend eine Vielzahl von feststehenden Permanentmagneten (174, 176, 178, 180), die an dem Schlitten (150) befestigt sind, wobei die Vielzahl von feststehenden Permanentmagneten (174, 176, 178, 180) positioniert ist, sodass eine Drehung der Vielzahl von drehbaren Permanentmagneten (124, 126, 128, 130) eine abwechselnde Abstoßungskraft und Anziehungskraft auf die Vielzahl von feststehenden Permanentmagneten (174, 176, 178, 180) bewirkt, die in einer Hin- und Herbewegung des Schlittens (150) parallel zu der Achse resultiert;
einen Kurbelarm (101), der eine Nockenrolle (102) aufweist, die an einem ersten Ende des Kurbelarms (101) positioniert ist;
eine Eingangsnockenwellenanordnung nach Anspruch 1, wobei der Eingangsnocken (100) der Eingangsnockenwellenanordnung mit der ersten hin- und hergehenden Welle (106) gekoppelt ist, die Nockenrolle (102) des Kurbelarms (101) in der vertieften Laufbahn (125) des Eingangsnockens (100) eingegriffen ist und eine Drehung des Kurbelarms (101) in einer Hin- und Herbewegung der ersten hin- und hergehenden Welle senkrecht zu der Achse und in der entsprechenden Hin- und Herbewegung des Schlittens (150) parallel zu der Achse resultiert;
eine zweite hin- und hergehende Welle (220, 222), die mit dem Schlitten (150) gekoppelt ist, die zweite hin- und hergehende Welle (220, 222) umfassend eine Nockenrolle (225, 227); und
eine Ausgangsnockenwellenanordnung nach Anspruch 8, wobei die Nockenrolle (225, 227) der zweiten hin- und hergehenden Welle (220, 222) in der vertieften Laufbahn (230, 232) des Ausgangsnockens (200, 205) der Ausgangsnockenwellenanordnung eingegriffen ist.

15. - Magnetische Antriebsstrangvorrichtung nach Anspruch 14, ferner umfassend eine Kurbelwelle (123), die mit dem Kurbelarm (101) gekoppelt ist, und einen kontinuierlichen Antriebsmotor (120), der mit der Kurbelwelle (123) gekoppelt ist, um die Drehung des Kurbelarms (101) bereitzustellen.

## Revendications

1. - Agencement d'arbre à cames pour définir un temps de passage d'une pluralité d'aimants permanents rotatifs (124, 126, 128, 130) d'une transmission magnétique, l'agencement d'arbre à cames comprenant :
une came d'entrée (100) comprenant une piste en retrait (125) destinée à s'engager avec un galet de came (102) d'un bras de manivelle (101) et comprenant en outre un ou plusieurs supports pour fixer la came d'entrée (100) à un arbre à mouvement alternatif (106), l'arbre à mouvement alternatif (106) étant destiné à faire tourner une pluralité d'aimants permanents rotatifs (124, 126, 128, 130) en réponse à une rotation du bras de manivelle (101) qui est apte à produire une course à mouvement alternatif d'une navette (150) comprenant une pluralité d'aimants permanents fixes (174, 176, 178, 180) ; et
la piste en retrait (125) de la came d'entrée (100) est dimensionnée pour définir un temps de passage de la pluralité d'aimants permanents rotatifs (124, 126, 128, 130) pendant la course à mouvement alternatif de la navette (150),
**caractérisé par le fait que** le temps de passage défini par la piste en retrait (125) de la came d'entrée (100) est suffisant pour permettre à la navette (150) d'effectuer sa course à mouvement alternatif.

2. - Agencement d'arbre à cames selon la revendication 1, dans lequel le temps de passage défini par la piste en retrait (125) de la came d'entrée (100) assure un alignement magnétique maximal entre la pluralité d'aimants permanents rotatifs (124, 126, 128, 130) et la pluralité d'aimants permanents fixes (174, 176, 178, 180) de la navette (150) pendant la course à mouvement alternatif de la navette (150).

3. - Agencement d'arbre à cames selon la revendication 1, dans lequel la pluralité d'aimants permanents rotatifs (124, 126, 128, 130) sont amenés à tourner de 180° pendant chaque rotation du bras de manivelle (101).

4. - Agencement d'arbre à cames selon la revendication 1, dans lequel une vitesse de la rotation de la pluralité d'aimants permanents rotatifs (124, 126, 128, 130) est sinusoïdale et la piste en retrait (125) de la came d'entrée permet un mouvement minimal du galet de came (102) aux positions à 90° et à 270° de la piste en retrait (125).

5. - Agencement d'arbre à cames selon la revendication 1, dans lequel une largeur aux positions à 0° et à 180° de la piste en retrait (125) est sensiblement égale à un diamètre du galet de came (102), et dans lequel une largeur aux positions à 90° et à 270° de la piste en retrait (125) est sensiblement égale à un balancement du bras de manivelle (101).

6. - Agencement d'arbre à cames selon la revendication 1, comprenant en outre :
un vilebrequin (123) accouplé au bras de manivelle (101) ; et
un moteur à entraînement continu (120) accouplé au vilebrequin (123) pour assurer la rotation du bras de manivelle (101).

7. - Agencement d'arbre à cames selon la revendication 4, dans lequel une largeur aux positions à 90° et à 270° de la piste en retrait (125) est sensiblement égale à une distance d'un centre du vilebrequin (123) à un diamètre extérieur du galet de came (102).

8. - Agencement d'arbre à cames pour transformer une entrée à mouvement alternatif en une sortie rotative, l'agencement d'arbre à cames comprenant :
une came de sortie (200, 205) ayant une piste en retrait (230, 232) destinée à s'engager avec un galet de came (225, 227) d'un arbre à mouvement alternatif (220, 222), une force produite par l'arbre à mouvement alternatif (220, 222) fluctuant pendant une course à mouvement alternatif de l'arbre à mouvement alternatif (220, 222) ; et
la piste en retrait (230, 232) de la came de sortie (200, 205) fournissant une portion à accélération positive constante, une portion à vitesse constante et une portion à accélération négative constante pour réduire la fluctuation de la force produite par l'arbre à mouvement alternatif (220, 222) pendant la course à mouvement alternatif, et la piste en retrait (230, 232) de la came de sortie (200, 205) étant dimensionnée pour rendre maximale une transformation de l'énergie générée par la course à mouvement alternatif de l'arbre à mouvement alternatif (220, 222) en une sortie rotative.

9. - Agencement d'arbre à cames selon la revendication 8, dans lequel la portion à accélération positive constante de la piste en retrait (230, 232) de la came de sortie (200, 205) représente environ 20 % de la piste en retrait.

10. - Agencement d'arbre à cames selon la revendication 8, dans lequel la portion à vitesse constante de la piste en retrait (230, 232) de la came de sortie (200, 205) représente environ 50 % de la piste en retrait (230, 232).

11. - Agencement d'arbre à cames selon la revendication 8, dans lequel la portion à accélération négative constante de la piste en retrait (230, 232) de la came de sortie (200, 205) représente environ 30 % de la piste en retrait (230, 232).

12. - Agencement d'arbre à cames selon la revendication 8, comprenant en outre :
une navette (150) accouplée à l'arbre à mouvement alternatif (220, 222), la navette (15) comprenant une pluralité d'aimants permanents fixes (174, 176, 178, 180), la pluralité d'aimants permanents fixes (174, 176, 178, 180) étant positionnés de telle sorte qu'une rotation d'une pluralité d'aimants permanents rotatifs (124, 126, 128, 130) provoque une force de répulsion et une force d'attraction en alternance sur la pluralité d'aimants permanents fixes (174, 176, 178, 180), ce qui conduit à la course à mouvement alternatif de l'arbre à mouvement alternatif (220, 222).

13. - Agencement d'arbre à cames selon la revendication 8, comprenant en outre :
un arbre de sortie (240) accouplé à la came de sortie (200, 205), la came de sortie (200, 205) étant destinée à faire tourner l'arbre de sortie (240) en réponse à la course à mouvement alternatif de l'arbre à mouvement alternatif (220, 222) ; et
un volant d'inertie accouplé à l'arbre de sortie (240).

14. - Dispositif de transmission magnétique comprenant :
une pluralité d'aimants permanents rotatifs (124, 126, 128, 130), chacun des aimants permanents rotatifs (124, 126, 128, 130) ayant un pôle nord et un pôle sud opposé alignés dans un plan ;
une pluralité de premiers arbres rotatifs, chacun de la pluralité d'aimants permanents rotatifs (124, 126, 128, 130) étant apte à tourner grâce à l'un respectif de la pluralité de premiers arbres rotatifs autour d'un axe dans le plan et entre les pôles opposés ;
un premier arbre à mouvement alternatif (106) accouplé à la pluralité de premiers arbres rotatifs ;
une navette (150) comprenant une pluralité d'aimants permanents fixes (174, 176, 178, 180) fixés à la navette (150), la pluralité d'aimants permanents fixes (174, 176, 178, 180) étant positionnées de telle sorte qu'une rotation de la pluralité d'aimants permanents rotatifs (124, 126, 128, 130) provoque une force de répulsion et une force d'attraction en alternance sur la pluralité d'aimants permanents fixes (174, 176, 178, 180), ce qui conduit à une course à mouvement alternatif de la navette (150) parallèle à l'axe ;
un bras de manivelle (101) ayant un galet de came (102) positionné à une première extrémité du bras de manivelle (101) ;
un agencement d'arbre à cames d'entrée selon la revendication 1, la came d'entrée (100) de l'agencement d'arbre à cames d'entrée étant accouplée au premier arbre à mouvement alternatif (106), le galet de came (102) du bras de manivelle (101) étant engagé dans la piste en retrait (125) de la came d'entrée (100), et une rotation du bras de manivelle (101) conduisant à une course à mouvement alternatif du premier arbre à mouvement alternatif perpendiculaire à l'axe et à la course à mouvement alternatif correspondante de la navette (150) parallèle à l'axe ;
un second arbre à mouvement alternatif (220, 222) accouplé à la navette (150), le second arbre à mouvement alternatif (220, 222) comprenant un galet de came (225, 227) ; et
un agencement d'arbre à cames de sortie selon la revendication 8, le galet de came (225, 227) du second arbre à mouvement alternatif (220, 222) étant engagé dans la piste en retrait (230, 232) de la came de sortie (200, 205) de l'agencement d'arbre à cames de sortie.

15. - Dispositif de transmission magnétique selon la revendication 14, comprenant en outre un vilebrequin (123) accouplé au bras de manivelle (101) et un moteur à entraînement continu (120) accouplé au vilebrequin (123) pour assurer la rotation du bras de manivelle (101).
